# EUROPEAN PATENT APPLICATION

(11) **EP 2 458 782 A1**
(43) Date of publication of application: **30.05.2012**
(21) Application number: 10788743.2
(22) Date of filing: 10.05.2010
(51) Int. Cl.: H04L 12/24

(54) **METHOD FOR MULTIPLEXING HOT BACKUP PORTS AND NETWORK SYSTEM THEREOF**

(30) Priority: 15.10.2009 CN 200910180818
(71) Applicant: ZTE Corporation, Shenzhen, Guangdong 518057 (CN)
(72) Inventor: ZHU, Chengxu, Shenzhen Guangdong 518057 (CN)
(74) Representative: Manitz, Finsterwald & Partner GbR
(86) International application number: PCT/CN2010/072576
(87) International publication number: WO 2010/145347

(57) **Abstract**

The present invention provides a method for multiplexing hot backup ports and a network system thereof. The method comprises: configuring a plurality of Virtual Local Area Networks (VLANs) on the backup port, an identifier of each VLAN being consistent with an identifier of a VLAN of a corresponding primary port; and grouping VLANs with the same identifier on the primary and backup ports into the same VLAN group on a layer-2 device, and forming a primary link and a corresponding backup link during hot backup. The present invention can implement N:1 port level backup, and each backup group monopolizes the IP address resources so as to solve the problem of IP address conflict during hot backup.

## Description

### Technical Field

The present invention relates to the field of data communications, and in particular, to a method for multiplexing hot backup ports and a network system thereof in a broadband route access product.

### Background of the Related Art

Broadband route access products provide operators with controllable access services, and are now widely used. With large-scale use of the broadband route products, service reliability is put on the agenda. Now application scenes are all used in a stand-alone device, thus, if abnormity occurs in the device, services will be interrupted, which can not meet service usage with high reliability requirements. In places where access control is required and service reliability is high, current broadband route access products can not meet the requirements.

The port multiplexing technology is to transform a physical port into multiple logical ports through some technology. Because of access types of the ports, there are various technologies for implementing port multiplexing. On an Ethernet, a port can implement multiplexing by being divided into different virtual Local Area Networks (VLANs).

Hot backup provides a method for achieving service reliability. There are various approaches for implementing hot backup, which are divided into 1:1 backup of the device, N:1 (N is primary, and 1 is backup) backup of the device and 1:N backup of the device according to backup modes, or are divided into device level backup, card level backup and port level backup according to backup granularities. From the perspective of utilization of the device, N:1 port level backup has the highest economic value. How to implement multiplexing of broadband route access backup ports is a problem required to be solved first.

In the hot backup process, on the same device, an Internet Protocol (IP) address A can be allocated to a user of port 1, and can also be allocated to a user of port 2 when the user of port 1 is offline. At this point, IP address resources on the same device are shared and conflict of IP addresses will occur in two devices, thus resulting in a problem occurring in a traffic path from a service router to the user, that is, the service router cannot determine which device the traffic should flow to.

### Summary of the Invention

The technical problem to be solved by the present invention is to provide a method for multiplexing hot backup ports and a network system thereof so as to implement N:1 port level backup and implement one-to-many mapping of a port on a backup device to other ports.

In order to solve the above technical problem, the present invention provides a method for multiplexing hot backup ports comprising:
backing up a plurality of primary ports on devices to a backup port on a backup device;
configuring a plurality of Virtual Local Area Networks (VLANs) on the backup port, an identifier of each VLAN being consistent with an identifier of a VLAN of the primary ports; and
grouping VLANs with the same identifier on the primary and backup ports into the same VLAN group, and forming a primary link and a corresponding backup link.

The method has the following features: the primary link and the corresponding backup link share a virtual Media Access Control (MAC) address.

The method has the following features: the primary link and the corresponding backup link belong to the same backup group which monopolizes corresponding IP address resources.

The method has the following features: allocating an IP address to a user from the IP address resources when the user is online, and synchronizing the IP address to the backup device for registration, disallowing the IP address to be reallocated.

The method further comprises:
when abnormity occurs in the primary link and the backup link replaces the primary link for service by sending a package using the virtual MAC address, updating a MAC address table of the layer-2 device, and replacing the primary link to operate.all services on the primary link being switched to the backup link simultaneously.

The method further comprises:
the primary device actively sending a primary link normal message to the backup device after the primary link returns to normal, and the backup device synchronizing data on the backup link to the primary link after receiving the primary link normal message, switching the backup link back to the primary link after the synchronization is completed, and switching inbound flow of a user back to the primary link according to the virtual MAC address.

The present invention further provides a network system comprising a Layer-2 device and a plurality of broadband access servers which comprise at least one primary device and at least one backup device, wherein
the primary device is configured to backup a plurality of primary ports on the primary device to a backup port on the backup device, the primary ports being connected to the backup port by the layer-2 device;
the backup device is configured to configure a plurality of Virtual Local Area Networks (VLANs) on the backup port, an identifier of each VLAN being consistent with an identifier of a VLAN of a corresponding primary port; and
the layer-2 device is configured to group VLANs with the same identifier on the primary and backup ports into the same VLAN group on a layer-2 device, and form a primary link and a corresponding backup link.

The network system has the following features: the primary link and the corresponding backup link share a virtual Media Access Control (MAC) address.

The network system has the following features: the primary link and the corresponding backup link belong to the same backup group which monopolizes corresponding IP address resources.

The network system has the following features: the primary device is further configured to allocate an IP address to a user from the IP address resources when the user is online, and synchronize the IP address to the backup device for registration.

In conclusion, the method for multiplexing hot backup ports and the network system thereof in accordance with the present invention can implement N:1 port level backup, and each backup group monopolizes the IP address resources so as to solve the problem of IP address conflict during hot backup.

### Brief Description of Drawings

Fig. 1 is a schematic diagram of a network system according to an embodiment of the present invention; and
Fig. 2 is a flowchart of a method for hot backup according to an embodiment of the present invention.

### Preferred Embodiments of the Present Invention

The preferred embodiments of the technical scheme of the present invention will be further described in detail in conjunction with accompanying drawings hereinafter.

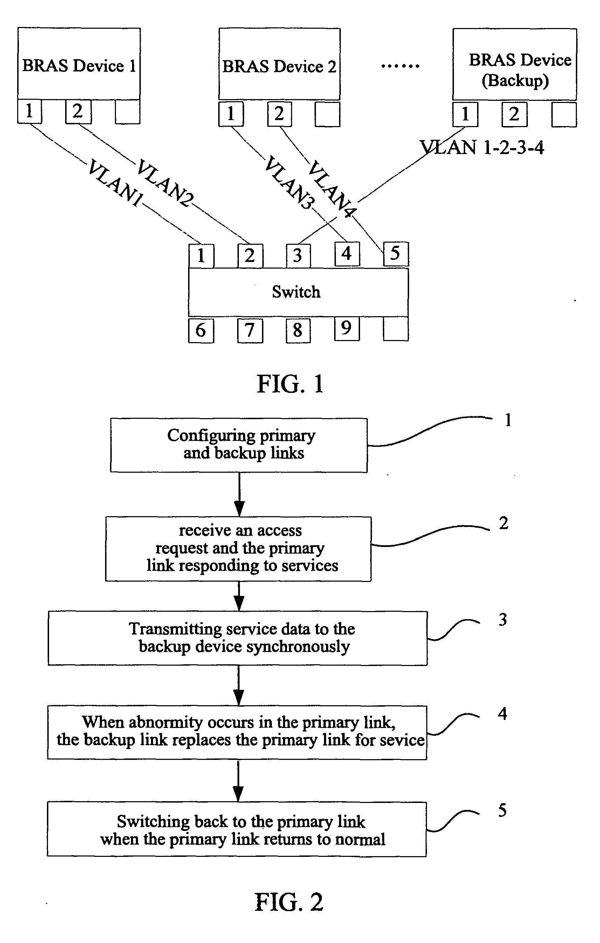

Fig. 1 is a schematic diagram of a network system according to an embodiment of the present invention. As shown in Fig. 1, the network system according to the embodiment includes a layer-2 device and a plurality of broadband access servers, multiple (such as Broadband Remote Access Servers (BRASs)) of which are primary devices, and one of which is a backup device. N primary ports on the primary devices (these primary ports can be distributed across a primary device or a plurality of primary devices) are backed up to a backup port of the backup device, and the backup port and the primary ports are not on the same device. The primary and backup ports are connected to the layer-2 device (such as a switch), and at the same time, other ports than the primary and backup ports on the devices are connected to layer-3 device (such as a router).

The key to the network system according to the embodiment is to configure a plurality of VLANs, such as VLAN 1-2-3-4 in Fig. 1, on the backup port, i.e., configure in total four VLANs, VLAN 1, VLAN 2, VLAN 3 and VLAN 4 under backup port 1. An identifier of each VLAN is consistent with an identifier of a VLAN of a corresponding primary port, for example, port 1 on BRAS device 1 corresponds to VLAN 1, port 2 on BRAS device 1 corresponds to VLAN 2, port 1 on BRAS device 2 corresponds to VLAN 3, and port 2 on BRAS device 2 corresponds to VLAN 4. VLANs with the same identifier on the primary and backup ports are grouped into the same VLAN group on the layer-2 device to form a primary link and a backup link. The links in a primary and backup relationship belong to the same backup group. A primary link is elected from links in the same backup group through a primary and backup links election protocol. The primary and backup links share one virtual MAC address, which is used to access services (gateway MAC learned by a user is this virtual MAC address). When switching between the primary and backup links occurs, switching will occur in a port to which the virtual MAC address is directed, and the original uplink traffics of the user will be switched according to the virtual MAC address.

The backup group mainly contains resources, such as information of ports to which the primary and backup links belong, VLAN information and user IP address information, etc. These resources can only be used by users who are connected to line from the port, and online users of other ports can not apply for using the resources in this backup group. The backup group monopolizing the IP address resources ensures that there will be no users with the same IP address in the primary and backup devices, thus ensuring conflict will not occur in switching of the outbound flow.

The network system according to the embodiment can implement N:1 port level hot backup, and can save hot backup costs for operators in practical applications, for example, services on N ports are required to be backed up. The scheme according to the embodiment can save purchasing costs of N-1 ports for the operators.

Fig. 2 is a flowchart of a method for multiplexing hot backup ports according to an embodiment of the present invention. As shown in Fig. 2, the method for multiplexing hot backup ports according to the embodiment is applied to a system in which multiple broadband access servers is primary devices and a broadband access server is a backup device. N primary ports on the primary devices (these primary devices can be distributed across a primary device or a plurality of primary devices) are backed up to a backup port of the backup device, and the backup port and the primary ports are not on the same device. The method comprises the following steps.

### 1. Primary and backup links are configured.

A backup port of a backup device is divided into a plurality of sub-ports, a different VLAN being configured on each sub-port, and an identifier of a VLAN of each sub-ports being consistent with an identifier of a VLAN of a corresponding primary port. VLANs with the same identifier on the primary and backup ports are grouped into the same VLAN group on the layer-2 device to form a primary link and a backup link. The links in a primary and backup relationship belong to the same backup group.

Backup group information is stored in the primary and backup devices, and mainly includes information of ports to which the primary and backup links belong, VLAN information and user IP address information, etc.

A primary link is elected from links belonging to the same backup group through a primary and backup links election protocol. The primary link is used to respond to services, and the backup link is used to monitor the state of the primary link.

### 2. A user is accessed and the primary link responds to the services.

The primary and backup links share a virtual MAC, and when a user is accessed and the primary link normally responds to the services, the primary link performs operations at service level using the virtual MAC address.

For example, when the user is online, the user learns that the MAC address of a gateway is the virtual MAC address by connecting to the BRAS via the layer-2 device, such as a switch, which selects a data output interface according to the MAC address.

The primary link periodically sends a keep-alive message to a corresponding backup link actively, informs the backup link that the primary link operates normally, and at the same time sends a package with the virtual MAC address to the layer-2 device, such as a switch, which learns the MAC address after receiving the package and updates a MAC table.

### 3. The primary device obtains information of the backup group according to the primary link, and then obtains information of the corresponding backup link according to the information of the backup group to transmit service data to the backup device synchronously.

When the user is accessed and the primary link responds to the services, an IP address is allocated to the user from IP address resources monopolized by the backup group, the IP address of the user is synchronized to the backup device to indicate that the IP address is occupied and is not allowed to be reallocated.

The primary device sends service data (i.e., user information, including a user IP and other service related information) to the backup device, which then receives the service data sent by the primary device for backup.

The backup device performs synchronization and resource occupation according to access protocols (such as Point to Point Protocol over Ethernet (PPPOE), Internet Protocol over Ethernet (IPOE), etc.). The backup device obtains information synchronously sent by the primary device, registers the IP address (indicating that the IP address has been used and is not allowed to be reallocated), and backfills data in a protocol data region at the same time. For the PPPOE protocol, the backfilled data includes backup link information, session ID registration (indicating occupation and disallowing reallocation), an MAC address of the user, an IP address and modulus, etc. For the IPOE, data transmitted to the protocol includes backup link information, an IP address, a MAC address, etc.

The backup device initializes a state of an access protocol according to the obtained information to ensure consistency between states of the primary and backup protocols and a smooth transition between switched states.

### 4. When abnormity occurs in the primary link, the primary link is switched to the backup link.

When abnormity occurs in the primary link and the primary link is switched to the backup link, the backup link sends a package using the same virtual MAC address and updates a MAC address table of the layer-2 device. The layer-2 device such as a switch selects an output interface according to a destination MAC address in the package, and thus uplink traffics at the user side has been switched according to the virtual MAC address, and at this point, the data message originally directed to the primary port is transmitted to the backup port.

The backup link replaces the primary link to operate, and all services originally on the primary link are switched to the backup link simultaneously.

### 5. If the primary link returns to normal, the backup link is required to perform data synchronization; and after the synchronization is completed, the backup link is switched back to the primary link (the switching process is the same as that in step 4, and will not be repeated here), and the primary link responds to the services such that the services are not interrupted.

The primary device actively sends a primary link normal message to the backup device after the primary link returns to normal. The backup device synchronizes the data on the backup link to the primary link after receiving the message. After the synchronization is completed, the back link is switched back to the primary link, and online traffics of the user are switched to the primary link according to the virtual MAC address. At the instant of the switching, some time is required to process downlink traffics, and a downlink data message will be sent to the user through the original backup link. For the user, the uplink and downlink traffics will not be lost (the services will not be interrupted), and at the instant of the switching, there is a case that the uplink and downlink traffics are not transmitted through the same link.

The method for multiplexing hot backup ports according to the embodiment can implement N:1 port level hot backup, and can save hot backup costs for operators in practical applications, for example, services on N ports are required to be backed up. The scheme according to the embodiment can save purchasing costs of N-1 ports for the operators.

The present invention is not limited to be applied to a system in which multiple broadband access servers is primary devices and a broadband access server is a backup device. It can also be applied to a system in which multiple broadband access servers is backup devices, as long as the primary and backup links are not on the same device.

Of course, the present invention may also have other various embodiments. Various corresponding modifications and variations to the present invention may be made by those skilled in the art without departing from the spirit and substance of the present invention. Any modification, equivalent substitution and improvement made within the spirit and principle of the present invention should be covered within the protection scope of the present invention.

### Industrial Applicability

The method for multiplexing hot backup ports and the network system thereof in accordance with the present invention can implement N:1 port level backup, and each backup group monopolizes the IP address resources so as to solve the problem of IP address conflict during hot backup.

## Claims

1. A method for multiplexing hot backup ports comprising:
backing up a plurality of primary ports on devices to a backup port on a backup device;
configuring a plurality of Virtual Local Area Networks (VLANs) on the backup port, an identifier of each VLAN being consistent with an identifier of a VLAN of the primary ports; and
grouping VLANs with the same identifier on the primary and backup ports into the same VLAN group, and forming a primary link and a corresponding backup link..

2. The method according to claim 1, wherein the primary link and the corresponding backup link share a virtual Media Access Control (MAC) address.

3. The method according to claim 1 or 2, wherein the primary link and the corresponding backup link belong to the same backup group which monopolizes corresponding IP address resources.

4. The method according to claim 3, further comprising:
allocating an IP address to a user from the IP address resources when the user is online, and synchronizing the IP address to the backup device for registration, disallowing the IP address to be reallocated.

5. The method according to claim 4, further comprising:
when abnormity occurs in the primary link and the backup link replaces the primary link for service by sending a package using the virtual MAC address, updating a MAC address table of the layer-2 device, and replacing the primary link to operate.all services on the primary link being switched to the backup link simultaneously.

6. The method according to claim 5, further comprising:
the primary device actively sending a primary link normal message to the backup device after the primary link returns to normal, and the backup device synchronizing data on the backup link to the primary link after receiving the primary link normal message, switching the backup link back to the primary link after the synchronization is completed, and switching inbound flow of a user back to the primary link according to the virtual MAC address.

7. A network system comprising a network system comprising a Layer-2 device and a plurality of broadband access servers which comprise at least one primary device and at least one backup device, wherein
the primary device is configured to backup a plurality of primary ports on the primary device to a backup port on the backup device, the primary ports being connected to the backup port by the layer-2 device;
the backup device is configured to configure a plurality of Virtual Local Area Networks (VLANs) on the backup port, an identifier of each VLAN being consistent with an identifier of a VLAN of a corresponding primary port; and
the layer-2 device is configured to group VLANs with the same identifier on the primary and backup ports into the same VLAN group on a layer-2 device, and form a primary link and a corresponding backup link.

8. The method according to claim 7, wherein the primary link and the corresponding backup link share a virtual Media Access Control (MAC) address.

9. The method according to claim 7 or 8, wherein the primary link and the corresponding backup link belong to the same backup group which monopolizes corresponding IP address resources.

10. The method according to claim 9, wherein the primary device is further configured to allocate an IP address to a user from the IP address resources when the user is online, and synchronize the IP address to the backup device for registration.
